# EUROPEAN PATENT APPLICATION

(11) **EP 2 567 847 A1**
(43) Date of publication of application: **13.03.2013**
(21) Application number: 11180266.6
(22) Date of filing: 06.09.2011
(51) Int. Cl.: B60K 15/04, B60K 15/03

(54) **Fuel tank module**

(71) Applicant: Caterpillar, Inc., Peoria, IL 61629-6490 (US)
(72) Inventor: Goletto, Bruno, 38041 Grenoble Cedex (FR); Sappey, Sebastien, 38041 Grenoble Cedex (FR)
(74) Representative: Modiano, Micaela Nadia

(57) **Abstract**

A fuel tank module for assembly into a vehicle is disclosed. The fuel tank module is provided with additional filling options to meet changing requirements at a work site. The fuel tank module has a first filler component. A first blank or a second blank are alternatively and detachably positionable at a port provided on the fuel tank module. The second blank is provided with at least one through passage for a second filler component. The second filler component provides a fuel filling option that co-exists with the first filler component but used as an alternative to the first filler component.

## Description

### Technical Field

This disclosure relates to the field of fuel tanks for vehicles and in particular to fuel tank modules for assembly into a vehicle.

### Background

Vehicles, such as earthmoving or mining vehicles, may have one or more fuel tanks to supply fuel to the engine which powers the vehicle. The fuel tanks may be manufactured as a module of the vehicle. The fuel tank may, hence, be manufactured separately and subsequently assembled into the vehicle.

The fuel tank module may be produced to meet the requirements of a vehicle at a work site. Generally, a variety of fuel tanks may be available and which may be suitable for the different work requirements. As an example, a fuel tank module may be provided with either a standard fuel filler pipe, a fast fill component or a fuel pump component. The specific type of fuel tank module meeting the work requirements may be selected for assembly onto the vehicle. It may be necessary to retrofit a different type of fuel tank module should the refuelling requirements of the vehicle change.

The fuel tank module may be positioned within the vehicle based on the weight distribution and space limitation. Generally a fuel tank module may be positioned deep within the machine. Hence, retrofitting a vehicle by installing an alternative fuel tank module may require the vehicle to be substantially disassembled.

The present disclosure is directed, at least in part, to improving or overcoming one or more aspects of the prior art system.

### Brief Summary of the Invention

In a first aspect, the present disclosure describes a fuel tank module for a vehicle, the fuel tank module comprising a body for receiving and containing fuel; a first filler component coupled to the body for delivering fuel into the body; a port disposed on the body; and a first blank and a second blank alternatively and detachably positionable at the port, each blank having a main surface that extends to cover and seal the port, wherein the second blank is provided with at least one through passage for a second filler component.

In a second aspect, the present disclosure describes a method of retrofitting a fuel tank module comprising the steps of providing a body having a first filler component and a port sealed by a detachable first blank; removing the first blank; and positioning a second blank at the port, the second blank being provided with at least one through passage for a second filler component.

### Brief Description of the Drawings

The foregoing and other features and advantages of the present disclosure will be more fully understood from the following description of various embodiments, when read together with the accompanying drawings, in which:
Fig. 1 is an isometric view of a fuel tank module with a first blank according to the present disclosure;
Fig. 2 is an isometric view of a portion of the fuel tank module with exploded views of a first filler and a first blank according to the present disclosure;
Fig. 3 is an isometric view of a fast fill attachment on a second blank according to the present disclosure;
Fig. 4 is an isometric view of a pump attachment on a second blank according to the present disclosure; and
Fig. 5 is an isometric view of the fuel tank module with a second blank having the fast fill attachment of Fig. 3 according to the present disclosure.

### Detailed Description

This disclosure generally relates to a fuel tank module **10** for assembly into a vehicle. The fuel tank module **10** may be modified according to a change in work requirements while in an assembled vehicle.

The fuel tank module **10** may comprise a body **12**, a first filler component **14**, a port **15** and a first blank **16** or a second blank **36**.

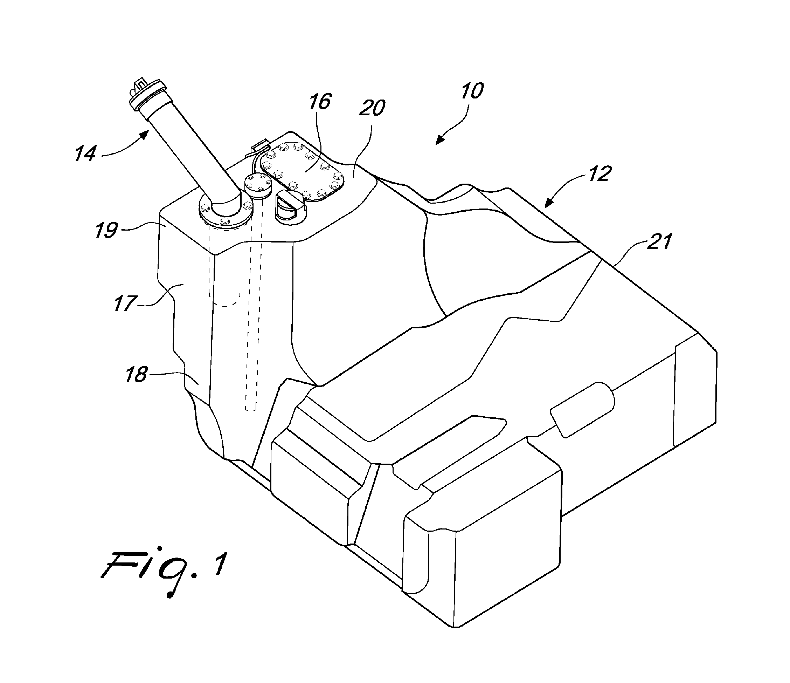

With reference to Fig. 1, the body **12** may be configured to receive and contain fuel. The body may include a shell that may comprise a single layer. The shell may be made from any suitable material. In an embodiment, the shell may be non-metallic, preferably PA-6 material (Polyamide 6). The shell may enclose a hollow space for containment of the fuel.

The body **12** may be suitably formed as a rigid structure for assembly on a vehicle carriage. The body **12** may be shaped to fit within the vehicle carriage and to accommodate the parts of the vehicle. The body **12** may be provided with fittings for mounting the body **12** on the vehicle carriage and in fluid connection with components of the vehicle.

In an embodiment, the body **12** may have at least one extended portion **17** and a base portion **21**. The extended portion **17** and the base portion **21** may be monolithic and may jointly enclose the space for fuel containment. The body **12** may be assembled such that the base portion **21** may be supported on the vehicle carriage. The extended portion **17** may be supported by the side of the vehicle carriage.

In an embodiment, the base portion **21** may be suitably shaped to correspond with the general shape of the vehicle carriage. The base portion **21** may have a substantially rectangular shape. The base portion **21** may be substantially flat. The base portion **21** may have a longitudinal axis. The longitudinal axis of the base portion **21** may be coincident with a longitudinal axis of the vehicle carriage.

The extended portion **17** may be provided on the base portion **21**. The extended portion **17** may extend from a side of the base portion **21**. The extended portion **17** may have a base end **18** and a support end **19** at opposite termini. The base end **18** may be connected to the base portion **21**. The support end **19** may be a free end. The support end **19** may be spaced from the base portion **21**. In an embodiment, the support end **19** may be spaced from the base portion **21** at a length substantially equal to the length of the extended portion. The longitudinal axis of the extended portion may extend between the base end **18** and the support end **19**.

The extended portion **17** may be inclined relative to the base portion **21**. The extended portion **17** may be transverse to the body portion **20**. The longitudinal axis of the extended portion **17** may be orthogonal to the longitudinal axis of the base portion **21**.

A support surface **20** may be formed at the support end **19** of the extended portion **17**. The support surface **20** may be substantially flat. In an embodiment the support surface **20** may be transverse to the longitudinal axis of the extended portion **17**. In an embodiment the support surface **20** may be parallel to the longitudinal axis of the base portion **21**.

The support surface **20** may be spaced from the base portion **21**. In an embodiment, the support surface **20** may be spaced from the base portion **21** by a length substantially equal to the length of the extended portion **17**. In an embodiment the distance between the support surface **20** and the base portion **21** may represent the points that are furthest apart in the fuel tank module **10**. With the fuel tank module **10** assembled on the vehicle carriage the support surface **20** may represent the point of the fuel tank module **10** that is furthest from the vehicle carriage.

The extended portion **17** may have a shape which may prevent any air being trapped during the filling operation. This may allow the full capacity of the fuel tank module **10** to be utilised without the presence of a venting feature. The extended portion **17** may be shaped such that the support end **19** has a smaller dimension than the base end **18**. In an embodiment, the extended portion may have a frustoconical shape. In an assembled vehicle the extended portion **17** may extend vertically relative to the vehicle carriage.

The first filler component **14** may be a fuel intake for the delivery of fuel into the body **12**. The first filler component **14** may provide a standard delivery of fuel into the body **12**. The first filler component **14** may allow the delivery of fuel at a maximum rate of 35 gpm (132.65 1pm) using standard fuel dispense nozzles.

The first filler component **14** may be coupled at a suitable position to the body **12**. In an embodiment, the first filler component **14** may be disposed on the extended portion **17**. The first filler component **14** may be coupled to the body **12** at the support surface **20** of the extended portion **17**. The first filler component **14** may be coupled to the body **12** at a through passage provided on the body **12**.

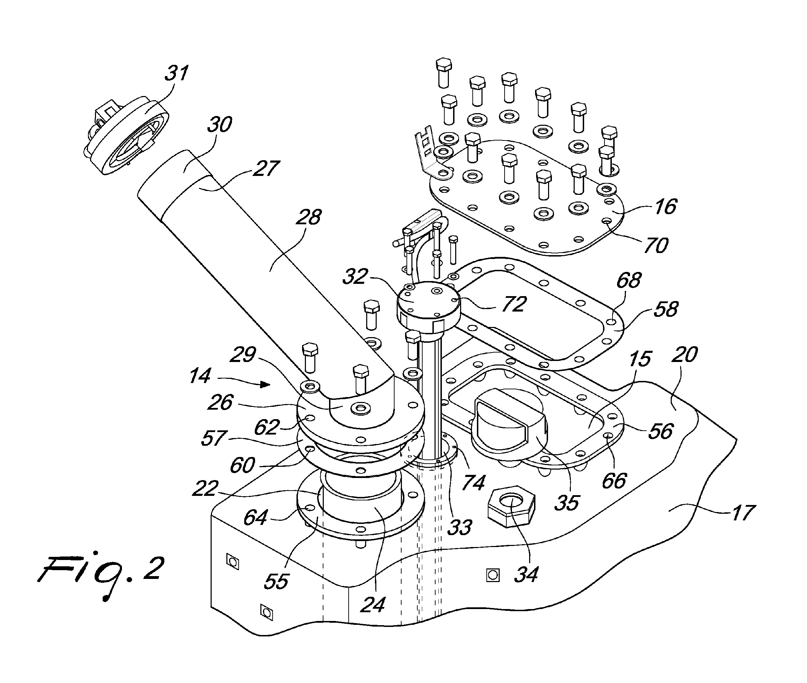

With reference to Fig. 2, the first filler component **14** may be coupled to the body **12** at a through passage provided on the extended portion **17**. In an embodiment, an aperture **22** may be provided on the support surface **20** to couple the first filler component **14** to the body **12**. The aperture **22** may be disposed on the support surface **20** at a suitable position. The aperture **22** may have a shape and a dimension to accommodate the first filler component **14**.

In an embodiment the distance between the aperture **22** and the base portion **17** may represent the points that are furthest apart in the fuel tank module **10**. With the fuel tank module **10** assembled on the vehicle carriage the aperture **22** may represent the point of the fuel tank module **10** that is furthest from the vehicle carriage.

The first filler component **14** may comprise an inner tube **24**, a collar **26**, an outer tube **28** and a cap **31**.

The inner tube **24** and the outer tube **28** may be connected. The inner tube **24** may receive fuel from the outer tube **28**.

The outer tube **28** may have a first tube portion **27** and a second tube portion **29**. Both the first tube portion **27** and the second tube portion **29** may be linear. The first tube portion **27** may be angled with respect to the second tube portion **29**.

The longitudinal axis of the first tube portion **27** may be inclined relative to the longitudinal axis of the extended portion **17**. The longitudinal axis of the second tube portion **29** may be parallel to the longitudinal axis of the extended portion **17**.

With the first filler component **14** coupled to the body **12**, the first tube portion **27** may be inclined relative to the support surface **20**. With the extended portion **17** disposed at a side of the base portion **21**, the first tube portion **27** may be positioned to be inclined away from the base portion **21**.

The longitudinal axis of the first tube portion **27** may be transverse to the longitudinal axis of the base portion **21**. The longitudinal axis of the second tube portion **29** may be transverse to the longitudinal axis of the base portion **21**.

The collar **26** may be positioned at the end of second tube portion **29** opposite the end connected to the first tube portion **27**. The collar **26** may be connected to the second tube portion **29**. In an embodiment, the collar **26** may be welded to the second tube portion **29**. The collar **26** may allow for the first filler component **14** to be coupled to the body **12**. The collar **26** may be provided with through holes to receive bolts. The through holes may be disposed around the aperture **22**. The support surface **20** may be provided with through holes corresponding to the through holes in the collar **26** to receive the bolts. In an embodiment, the through holes may be provided on a raised aperture rib **55** surrounding the aperture **22**. The raised aperture rib **55** may be mounted on the support surface **20**.

A collar gasket **57** may be provided between the collar **26** and the support surface **20** or the raised aperture rib **55**. The collar gasket **57** may include through holes **60** corresponding to the through holes **62** in the collar **26** or the through holes **64** in the raised aperture rib **55**.

An opening **30** may be positioned at the end of first tube portion **27** opposite the end connected to the second tube portion **29**. The opening **30** may be provided to connect with hose or pipe fittings from a fuel source in order to receive fuel. The opening **30** may be provided with the cap **31** sealingly to cover the opening **30**.

The inner tube **24** may be connected to the second tube portion **29** of the outer tube **28**. The longitudinal axis of the inner tube **24** may be coincident with the longitudinal axis of the second tube portion **29**. The inner tube **24** may be located completely or partially within the body **12**. The inner tube **24** may be linear and may extend from the aperture **22** into the space enclosed by body **12**.

The longitudinal axis of the inner tube **24** may be parallel to the longitudinal axis of the extended portion **17**. The longitudinal axis of the inner tube **24** may be transverse to the longitudinal axis of the base portion **21**.

A strainer (not shown) may be disposed between the inner tube **24** and the second tube portion **29** of the outer tube **28**. The strainer may be seated on the aperture rib **55** to encompass the inner tube **24**. The inner tube **24** may be covered by the strainer. The strainer may have a top flanged shape.

The port **15** may be a through passage. The port **15** may be disposed on the body **12**. The port **15** may be provided on the extended portion **17** of the body **12**. In an embodiment, the port **15** may be provided on the support surface **20** of the extended portion **17**. The port **15** may have a suitable shape and dimension.

The port **15** may be spaced from the aperture **22** on the support surface **20**. The port **15** and the aperture **22** may be positioned at opposite ends of the support surface **20**. The port **15** may be positioned such that sufficient space is available below the port **15** to receive filler components.

A series of through holes may be provided around the port **15**. In an embodiment, the through holes **66** may be provided on a raised port rib **56** surrounding the port **15**. The raised port rib **56** may be mounted on the support surface **20**.

The first blank **16** and the second blank **36** may be alternatively and detachably positionable at the port **15**. The first blank **16** and the second blank **36** may be alternatively and detachably connectable at the port **15**. A blank gasket **58** may be provided between the body **12** and the first blank **16** or the second blank **36**. The blank gasket **58** may be provided between the raised port rib **56** and the first blank **16** or the second blank **36**. The blank gasket **58** may include through holes **68** corresponding to the through holes **66** in the raised port rib **56** or the support surface **20**.

The first blank **16** and the second blank **36** may be coupled to the body **12** through a mechanical connection. The first blank **16** and the second blank **36** may be provided with through holes **70** which correspond to the through holes **68** provided around the port **15** for connection of the first blank **16** and the second blank **36** to the raised port rib **56** or the support surface **20** by bolts. The through holes **70** may be provided at the outer periphery of the first blank **16** and the second blank **36**.

The first blank **16** and the second blank **36** may each have a main surface that extends to cover and seal the port **15**. In an embodiment, the first blank **16** and the second blank **36** may be formed as plates. The first blank **16** and the second blank **36** may be formed of the same material as body **12**.

The fuel tank module **10** may further comprise a sensor **32**. The sensor **32** may be disposed on the body **12**. The sensor **32** may be provided on the extended portion **17** of the body **12**. The sensor **32** may be provided on the support surface **20** of the extended portion **17**. The sensor **32** may spaced from the first filler component **14** and the port **15**. In an embodiment, the sensor **32** may disposed between the first filler component **14** and the port **15**.

The sensor **32** may be coupled to the body **12** at a through orifice **33** provided on the body **12**. The sensor **32** may be coupled to the body **12** through a mechanical connection. The sensor **32** may be provided with through holes **72** which correspond to through holes **74** surrounding the orifice **33** on the body **12** for connection by bolts.

The fuel tank module **10** may further comprise a vent **34**. The vent **34** may be disposed on the body **12**. The vent **34** may be provided on the extended portion **17** of the body **12**. The vent **34** may be provided on the support surface **20** of the extended portion **17**. The vent **34** may be a through passage. A flange may be provided around the vent **34**. The outer surface of the flange may be suitably shaped to receive a cover **35** for the vent **34**. The vent **34** may be spaced from the first filler component **14** and the port **15**. In an embodiment, the vent **34** may be disposed between the first filler component **14** and the port **15**.

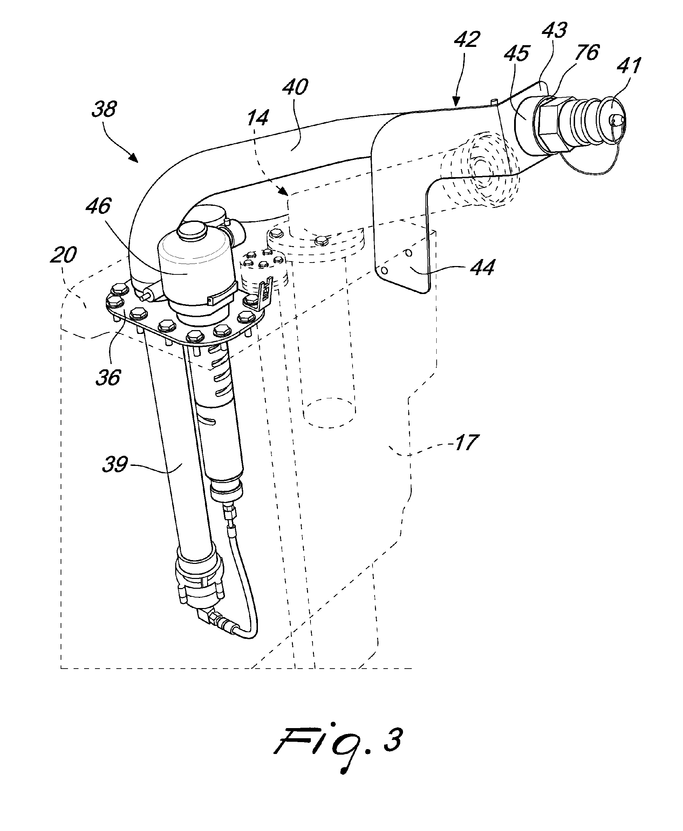

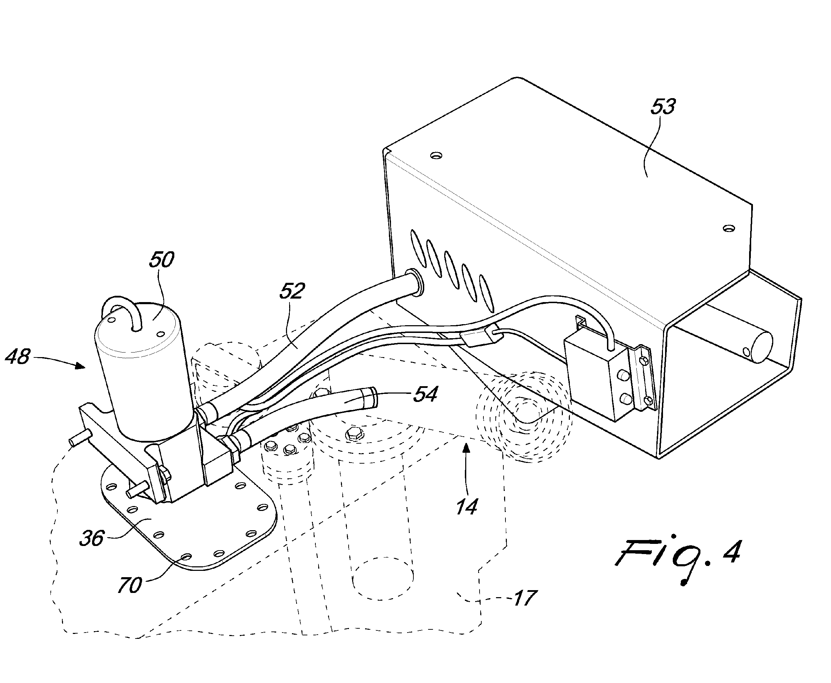

With reference to Figs. 3 and 4, the second blank **36** may be provided with at least one through passage. The at least one through passage may be provided for a second filler component **38**, **48**. The second blank **36** provided with the second filler component **38**, **48** may be fitted to the fuel tank module **10** and may be arranged over the port **15**. The second filler component **38**, **48** may be an alternative to the first filler component **14** for delivery of fuel into the fuel tank module **10**. The second filler component **38**, **48** may provide modified fuel filling options.

In an embodiment, the second blank **36** may be provided with a plurality of through passages for the second filler component. The position of the at least one through passage or plurality of through passages may be provided stably to receive and accommodate the second filler component **38**, **48**.

The second filler component **38**, **48** may be coupled to the second blank **36**. The second filler component **38**, **48** may comprise an attachment member.

In an embodiment, the second filler component may comprise an attachment member that is a fast fill attachment **38**. The fast fill attachment **38** may enable quick filling of the fuel tank module **10**. The fast fill attachment **38** may allow the delivery of fuel at a maximum fuel flow rate of 150gpm (568.5 1pm) using specific fast fill fuel dispense nozzles.

The fast fill attachment **38** may comprise a tube having a first portion **39** disposed on a side of the second blank **36** and a second portion **40** disposed at the opposite side of the second blank **36** for delivery of fuel from a source into the fuel tank module **10**. The tube may be coupled to the second blank **36**. The end of the second portion **40** opposite the end coupled to the second blank **36** may be provided with a fast fill dispense port **76**. The fast fill dispense port **76** may be sealingly covered by a cap **41**. The fast fill dispense port 76 may be connectable to a fuel source for delivery of fuel into the fuel tank module **10**.

In an embodiment, the first portion **39** may be a steel tube welded to the second blank **36** and the second portion **40** may be a molded rubber hose attached to the second blank 39 using a clamp.

With the second blank **36** positioned at the port **15**, the first portion **39** may be disposed within the body **12** while the second portion **40** may be disposed over the body **12**.

A support arm **42** may be provided to support the second portion **40**. The support arm **42** may support the second portion **40** at a distance from the body **12**. The support arm **42** may comprise a support portion **43** and a mounting portion **44**. The support arm **42** may be connected to the body **12** through a mechanical connection. The support arm **42** may be connected to the extended portion **17** of body **12**. The mounting portion **44** may be mounted to the extended portion **17**. The mounting portion **44** may space the support portion **43** from the extended portion **17**. In an embodiment, the mounting portion **44** may be curved. The mounting portion **44** may have be substantially L-shaped.

The support portion **43** may be inclined relative to the mounting portion **44**. The support portion **43** may be orthogonal relative to the mounting portion **44**. The support arm **42** may include a passage on the support portion **43** through which the second portion **40** may extend. A support collar **45** may be provided on the support portion **43** for the further support of the second portion **40**.

The fast fill attachment **38** may comprise a vent member **46**. The vent member **46** may be normally closed to prevent leaks that may occur during rough operations on slopes. The vent member **46** may prevent contaminated air from entering the fuel tank module **10**. The vent member **46** may be rollover safe up to a fuel head of 1.5 PSI. The vent member **46** may allow for positive venting of the fuel tank module **10** to atmosphere.

A separate vacuum vent may be required for venting of atmosphere to the fuel tank module **10** through a vented fuel cap or separate breather.

A shutoff valve may be provided in the fast fill attachment **38**. The shutoff valve may prevent overfilling or under filling the fuel tank module **10**. The shutoff valve may be provided in the fast fill dispense port **76**. The shutoff valve may allow for servicing of the fast fill dispense port **76** without draining the fuel tank module **10**.

The fast fill attachment **38** may not require tank pressure to operate the dispense nozzle shutoff so that the fuel tank module **10** may have a non-metallic wall or a thin metallic wall.

In an embodiment, the second filler component may comprise an attachment member that is a pump attachment **48**. The pump attachment **48** may enable pumping of fuel from a source into the fuel tank module **10**. The pump attachment **48** may be connected to a source of fuel.

The pump attachment **48** may comprise a pump **50** coupled to the second blank **36**.

The pump **50** may be connectable to a fuel source, such as an external cistern **53**. A first hose **52** may connect the pump **50** to the fuel source. A second hose **54** may connect the pump **50** to the first tube portion **27** of the first filler component **14**.

The pump attachment **48** may allow the delivery of fuel at a maximum rate of 11.4 gpm (43.21 1pm). The pump attachment **48** may allow refuelling from a stand alone tank without a dispense nozzle.

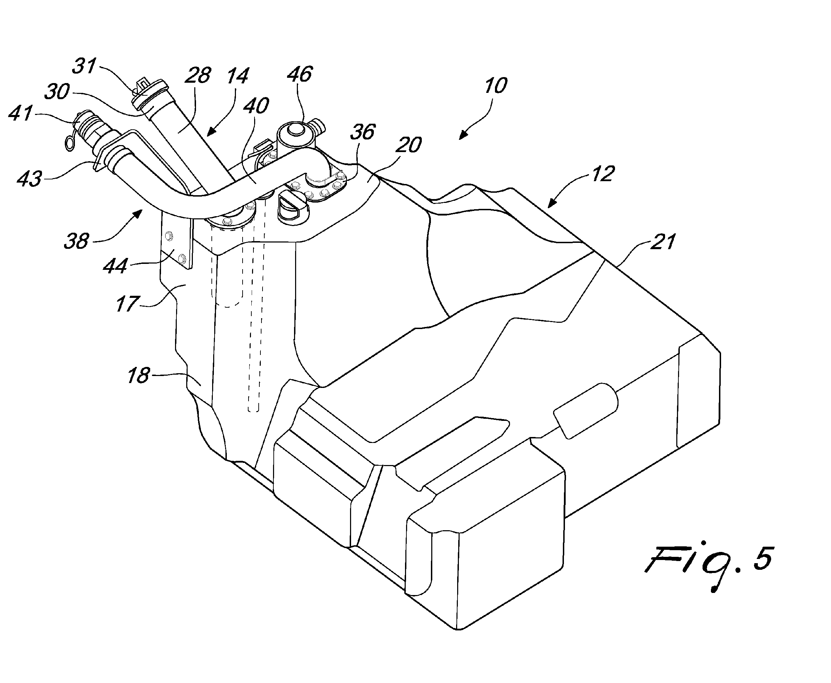

With reference to Fig 5, the second filler component comprised as the fast fill attachment **38** is coupled to the second blank **36** which is positioned on support surface **20** of the extended portion **17**.

The fuel tank module **10** of the present disclosure may be assembled in a vehicle. The fuel tank module **10** may be assembled in the vehicle such that the port **15** is positioned relative to the vehicle carriage for ease of accessibility.

A method of retrofitting a fuel tank module **10** may comprise providing the body **12**. The body **12** may have the first filler component **14** and a port **15**. The port **15** may be detachably sealed by a first blank **16**. The method may further comprise removing the first blank **16** and positioning a second blank **36** at the port **15**. The second blank **36** may be provided with at least one through passage for the second filler component. The method may further comprise coupling a second filler component to the second blank **36**.

The skilled person would appreciate that the foregoing embodiments may be modified or combined to obtain the fuel tank module **10** of the present disclosure.

### Industrial Applicability

This disclosure describes a fuel tank module **10** that may be retrofitted while in an assembled vehicle without disassembly thereof.

The fuel tank module **10** has a body **12** that may be modified in situ. The fuel tank module **10** may be provided with additional filling options to meet changing requirements at a work site. The fuel tank module **10** may be modified to include a fast fill attachment **38** or a pump attachment **48**.

The position of the fuel tank module **10** within the vehicle may enable a first blank **16** to be easily removed and replaced with a second blank **36** being provided with at least one through passage for a second filler component. The second filler component **38**, **48** may provide a fuel filling option that may co-exist with the first filler component but used as an alternative to the first filler component **14**. The second filler component may be a fast fill attachment **38** or a pump attachment **48**, as required due to the work exigencies.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A fuel tank module (10) for a vehicle, the fuel tank module (10) comprising:
a body (12) for receiving and containing fuel;
a first filler component (14) coupled to the body (12) for delivery of fuel into the body (12);
a port (15) disposed on the body (12); and
a first blank (16) and a second blank (36) alternatively and detachably positionable at the port (15), each blank (16, 36) having a main surface that extends to cover and seal the port (15), wherein the second blank (36) is provided with at least one through passage for a second filler component (38, 48).

2. The fuel tank module (10) according to claim 1 wherein the second filler component is coupled to the second blank (36).

3. The fuel tank module (10) according to claim 1 or 2 wherein the body (12) comprises an extended portion (17) and a base portion (21).

4. The fuel tank module (10) according to claim 3 wherein the extended portion (17) is transverse to the base portion (21).

5. The fuel tank module (10) according to claim 3 or 4 wherein the port (15) is disposed on the extended portion (17).

6. The fuel tank module (10) according to claim 3, 4 or 5 wherein the first filler component (14) is disposed on the extended portion (17).

7. The fuel tank module (10) according to any one of the preceding claims wherein the first blank (16) or the second blank (36) is detachably connectable to the body (12) through a mechanical connection.

8. The fuel tank module (10) according to any one of the preceding claims wherein the second filler component comprises a fast fill attachment (38).

9. The fuel tank module (10) according to any one of the preceding claims 1 to 7 wherein the second filler component comprises a pump attachment (48).

10. A vehicle comprising the fuel tank module (10) of any one of claims 1 to 9.

11. A vehicle according to claim 10 wherein the fuel tank module (10) is assembled such that the port (15) is positioned relative to the vehicle carriage for ease of accessibility.

12. A second filler component for the fuel tank module (10) of any one of claims 1 to 9 comprising an attachment member (38, 48) coupled to a second blank (36).

13. The second filler component of claim 12 wherein the attachment member is a fast fill attachment (38) comprising a tube connected to the second blank (36), the tube comprising a fast fill dispense port (76) connectable to a fuel source for delivery of fuel into the fuel tank module (10).

14. The filler component of claim 12 wherein the attachment member is a pump attachment (48) comprising a pump (50) connected to the second blank (36), the pump connectable to a fuel source for pumping fuel into the fuel tank module (10).

15. A method of retrofitting a fuel tank module (10) comprising the steps of:
providing a body (12) having a first filler component (14) and a port (15) detachably sealed by a first blank (16);
removing the first blank (16); and
positioning a second blank (36) at the port (15), the second blank (36) being provided with at least one through passage for a second filler component.
